# FASCICULE DE BREVET EUROPEEN

(11) **EP 1 905 299 B1**
(45) Date de publication et mention de la délivrance du brevet: **30.03.2011**
(21) Numéro de dépôt: 07301266.8
(22) Date de dépôt: 24.07.2007
(51) Int. Cl.: A01K 97/22

(54) **Châssis pour panier-siège de pêcheur**
Gestell für eine Sitzkiste für Angler
Frame for fishing seat-box

(30) Priorité: 28.09.2006 FR 0653980
(43) Date de publication de la demande: 02.04.2008
(73) Titulaire: Mossalgue, 77170 Brie Comte Robert (FR)
(72) Inventeur: Mossalgue, François, 94120, Fontenay Sous Bois (FR)
(74) Mandataire: Livet, Marie-José

(56) Documents cités:
- DE-U1- 20 315 516
- FR-A- 2 685 606
- FR-A1- 2 611 454
- JP-A- 2000 342 148

## Description

La présente invention a pour objet un châssis pour panier-siège de pêcheur.

Les pêcheurs ont l'habitude, lors de la pratique de leur sport favori de s'asseoir sur des sièges de forme parallélépédique ou trapézoïdale constitués par la superposition de plusieurs compartiments servant à contenir le matériel qui leur est indispensable (hameçon, plomb, fil, appât, moulinet...).

Ces paniers-sièges qui peuvent être relativement sophistiqués sont souvent équipés de différents accessoires, permettant ainsi au pêcheur de disposer d'une véritable « station » de pêche.

Quelle que soit leur configuration les paniers-sièges de pêcheur sont classiquement montés sur un cadre rigide reposant sur quatre pattes d'appui.

Ce cadre rigide est éventuellement équipé d'un repose-pied monté coulissant au moyen d'un système de glissières latérales.

Un tel repose-pied est équipé de deux pattes d'appui à sa partie avant mais est dépourvu de pied à sa partie arrière.

Il est à noter que dans le cadre de cette description les termes avant, arrière, latéral, supérieur, ... doivent être compris en se référant à un panier-siège en position d'utilisation sur lequel un pêcheur est assis.

Un panier-siège similaire est décrit par exemple par DE-U-20315516.

Lors d'une compétition, il arrive que le pêcheur doive se lever sur le repose-pied, notamment pour jeter des amorces dans l'eau.

Or, dans un tel cas, la rigidité du repose-pied à sa partie arrière dépourvue de pattes d'appui est très insuffisante, en particulier compte tenu du jeu existant obligatoirement entre le cadre rigide portant le panier-siège et le système de glissières latérales permettant la fixation du repose-pied à ce cadre.

La présente invention a pour objet de proposer un châssis pour panier-siège de pêcheur de nature à remédier à cet inconvénient et permettant au pêcheur de disposer d'une « station » de pêche particulièrement stable qui peut être assimilée à un véritable ponton.

Selon l'invention, un tel châssis pour panier-siège de pêcheur est caractérisé en ce qu'il comporte :
- un cadre rigide essentiellement rectangulaire équipé d'au moins trois, de préférence de quatre pattes d'appui et définissant un repose-pied,
- un caisson essentiellement rectangulaire portant le panier-siège, monté coulissant sur le cadre rigide et équipé de deux pattes d'appui à sa partie arrière, mais dépourvu de pattes d'appui à sa partie avant, et
- des moyens de blocage permettant de maintenir sélectivement le caisson portant le panier-siège dans une position repliée au-dessus du cadre rigide ou dans une position déployée à l'arrière de ce cadre selon le souhait du pêcheur.

En position repliée, le cadre rigide et le caisson portant le panier-siège qui sont constitués par des éléments essentiellement identiques sont superposés l'un au-dessus de l'autre, et donc le pêcheur ne peut pas utiliser le repose-pied, alors qu'au contraire en position déployée il peut disposer de celui-ci.

L'idée à la base de l'invention à donc consisté à « inverser » la structure des paniers-sièges classiques en les équipant d'un châssis particulier constitué par l'association d'une part d'un cadre rigide muni d'au moins trois pattes d'appui, ne portant pas le panier-siège mais correspondant au repose-pied, et d'autre part d'un caisson portant le panier-siège monté coulissant sur ce cadre rigide, et équipé de deux pattes d'appui à sa partie arrière mais dépourvu de pattes d'appui à sa partie avant.

Selon une caractéristique préférentielle de l'invention, les moyens de blocage sont constitués par deux barrettes formant butée montées solidairement sur le cadre rigide en regard l'une de l'autre et équipées à leurs extrémités respectives de deux encoches de blocage coopérant avec des organes de verrouillage solidaires du caisson portant le panier-siège de manière à définir la position repliée et la position déployée.

Selon l'invention, le cadre rigide ainsi que le caisson portant le panier-siège sont en règle générale constitués par l'assemblage de profilés de préférence tubulaires et à section rectangulaire.

Chacun de ces éléments comporte plus précisément deux poutres transversales parallèles reliées par des traverses latérales à leurs extrémités respectives.

Les traverses latérales du cadre rigide constituant le repose-pied sont en outre reliées par une série d'entretoises parallèles.

Les traverses latérales du caisson portant le panier-siège sont de préférence respectivement équipées, sur leur face interne de rainures de réception des barrettes formant butée solidaires du cadre rigide.

Ces barrettes permettent ainsi de guider le caisson lors de son déplacement entre la position repliée et la position déployée.

Selon l'invention, les barrettes formant butée peuvent avantageusement être fixées sur la face supérieure de la poutre transversale arrière du cadre rigide.

Selon une autre caractéristique de l'invention, les barrettes formant butée comportent un corps médian faisant saillie à la partie interne du caisson et délimité de part et d'autre par des épaulements formant butée ainsi que des branches latérales situées dans le prolongement du corps médian au-delà des épaulements et logées dans les rainures de réception des traverses latérales du caisson.

Ces branches latérales pénètrent dans des orifices correspondants percés dans les poutres transversales du caisson lors du déplacement de ce caisson entre la position repliée et la position déployée et sont équipées des encoches de blocage à leurs extrémités respectives.

Selon l'invention, les organes de verrouillage peuvent avantageusement être constitués par des coulisseaux mobiles en translation le long de la face externe des poutres transversales du caisson et équipés d'ergots de verrouillage susceptibles de pénétrer dans les encoches de blocage des barrettes formant butée pour maintenir le caisson portant le panier-siège en position repliée ou en position déployée.

Les caractéristiques du châssis pour panier-siège de pêcheur qui fait l'objet de l'invention seront décrites plus en détail en se référant aux dessins non limitatifs annexés dans lesquels :
- la figure 1 est une vue en perspective d'un panier-siège équipé d'un tel châssis,
- les figures 2 et 3 sont deux vues en perspective sous des angles différents du châssis pour panier-siège de pêcheur en position déployée,
- les figures 4 et 5 sont deux vues en perspective correspondant respectivement aux figures 2 et 3 mais représentant le châssis pour panier-siège de pêcheur en position repliée,
- la figure 6 est une vue en perspective d'une barrette formant butée, et
- la figure 7 est un détail de la figure 2 représentant les organes de verrouillage.

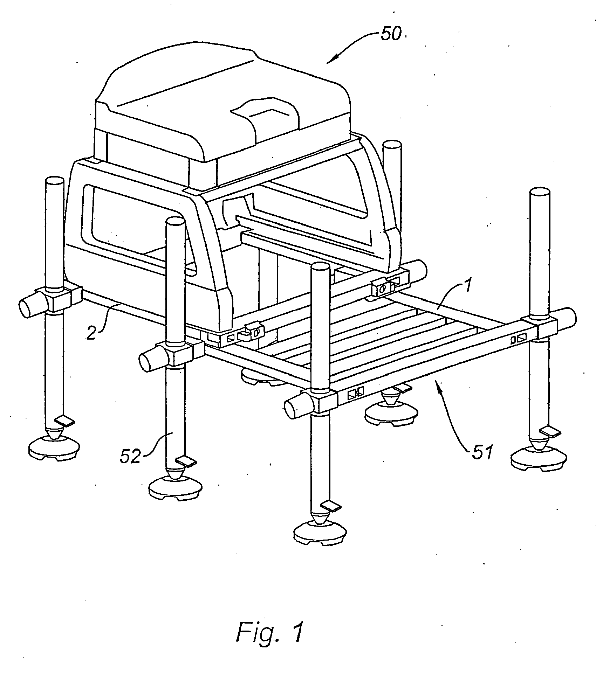

Selon la figure 1, le panier-siège 50 est monté sur un châssis 51 reposant sur des pattes d'appui 52.

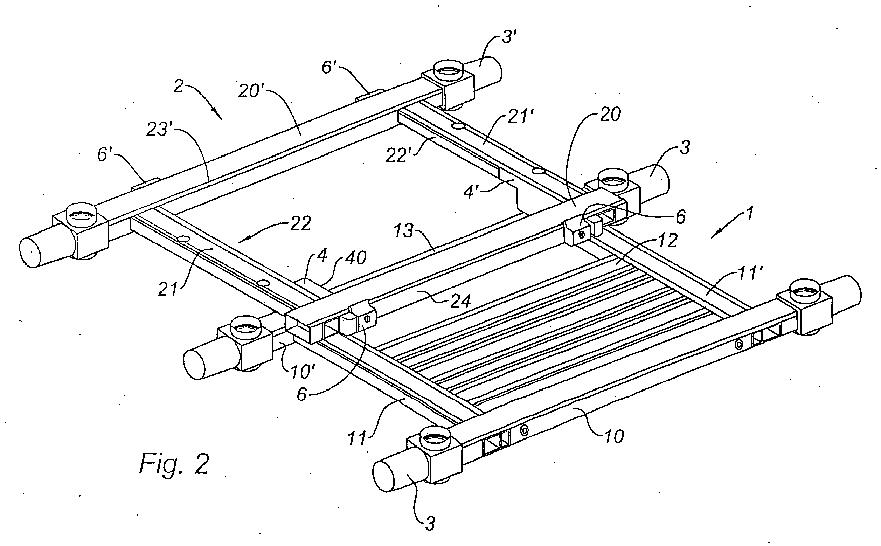

Selon les figures 1 à 5, le châssis 51 est constitué par l'association de deux éléments essentiellement identiques de forme rectangulaire à savoir un cadre rigide 1 définissant un repose-pied et un caisson 2 monté coulissant sur le cadre rigide 1 et portant le panier-siège 50 qui n'est pas représenté sur les figures 2 à 5.

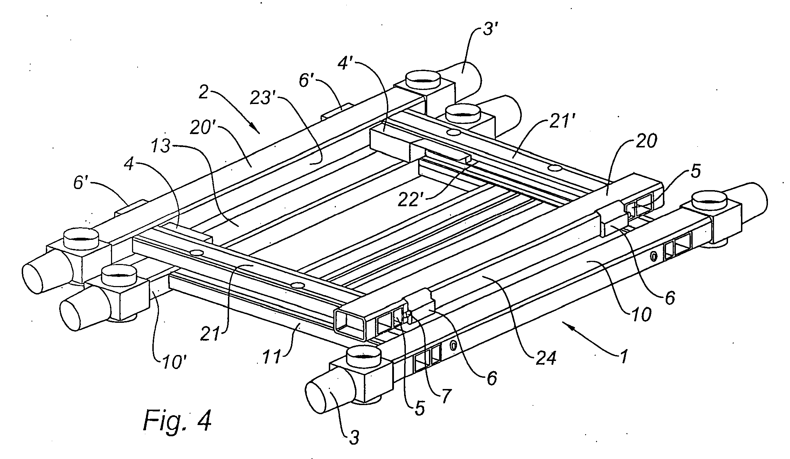

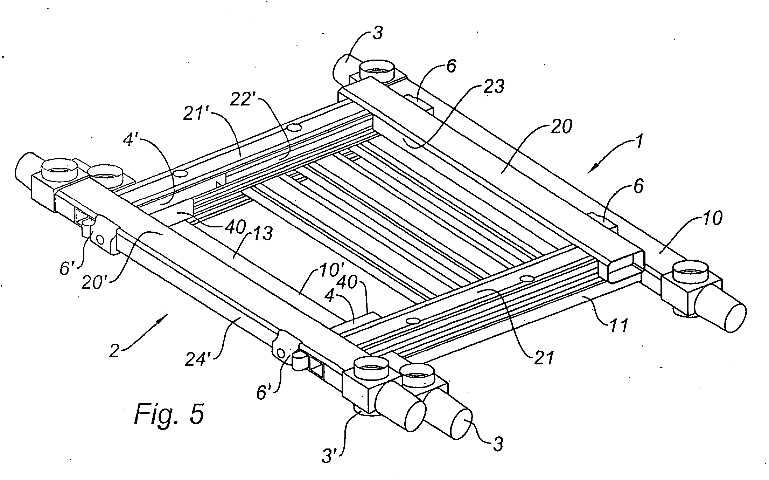

Le caisson 2 peut se déplacer entre une position représentée sur les figures 1, 2 et 3 dans laquelle il est déployé à l'arrière du cadre 1 et une position représentée sur les figures 4 et 5 dans laquelle il est replié au-dessus de celui-ci.

Le cadre 1 et le caisson 2 sont constitués par l'assemblage d'une série de profilés métalliques tubulaires de section rectangulaire.

Le cadre 1 comporte deux poutres transversales parallèles 10, 10' reliées à leurs extrémités respectives par deux traverses latérales 11, 11'.

Pour permettre au cadre 1 de remplir sa fonction de repose-pied les traverses latérales 11, 11' sont par ailleurs assemblées par une série d'entretoises 12 parallèles aux poutres transversales 10, 10'.

Le caisson 2 comporte lui aussi deux poutres transversales parallèles 20, 20' reliées à leurs extrémités respectives par deux traverses latérales 21, 21'.

Les poutres transversales 20, 20' du caisson 2 sont similaires aux poutres transversales 10, 10' du cadre 1.

Les traverses latérales 21, 21' du caisson 2 sont, elles aussi similaires aux traverses latérales 11, 11' du cadre 1.

Les poutres transversales 10, 10' du cadre 1 sont équipées à leurs extrémités d'embouts 3 tous identiques permettant le montage de pattes d'appui 52 qui ne sont pas représentées sur les figures 2 à 5.

Le cadre 1 repose ainsi sur quatre pattes d'appui 52 qui lui confèrent sa rigidité.

La poutre transversale arrière 20' du caisson 2 est elle aussi équipée à ses extrémités d'embouts 3' identiques aux embouts 3 et permettant le montage de pattes d'appui 52 non représentées sur les figures 2à5.

La poutre transversale avant 20 du caisson 2 est au contraire dépourvue d'embouts.

Le caisson 2 est ainsi équipé de deux pattes d'appui 52 à sa partie arrière mais dépourvu de pattes d'appui à sa partie avant.

Selon les figures 2 à 5, deux barrettes 4, 4' situées en regard l'une de l'autre sont respectivement fixées sur la face supérieure 13 de la poutre transversale arrière 10' du cadre rigide 1 à proximité des extrémités de cette poutre portant les embouts 3.

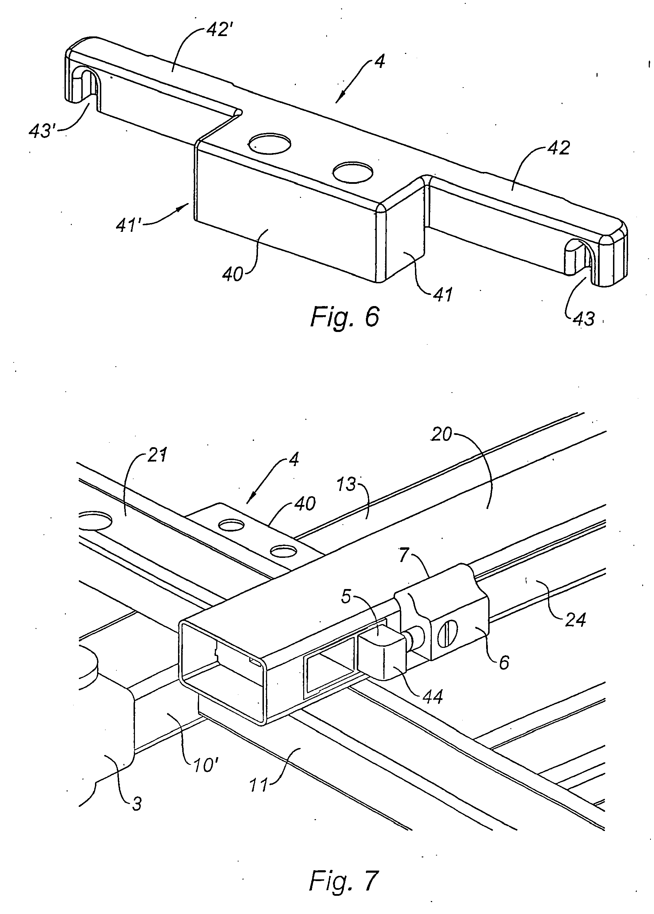

L'une de ces barrettes 4 est représentée sur la figure 6.

Selon cette figure cette barrette 4 comporte un corps médian 40 de forme parallélépipédique fixé sur la poutre 10' par sa face inférieure et délimité de part et d'autre par des épaulements 41, 41' formant butée.

Le corps médian 40 se prolonge au-delà des épaulements 41, 41' par deux branches latérales 42, 42' s'étendant au-delà de la poutre 10' et équipées à leurs extrémités respectives d'encoches de blocage 43, 43' dont la fonction sera précisée dans la suite de cet exposé.

Selon les figures 2 à 5, les traverses latérales 21, 21' du caisson 2 sont équipées sur leur face interne de rainures de réception 22, 22'.

Les branches latérales 42, 42' des barrettes 4, 4' sont logées en totalité dans ces rainures de réception 22' alors qu'au contraire le corps médian 40 fait saillie à la partie interne du caisson 2.

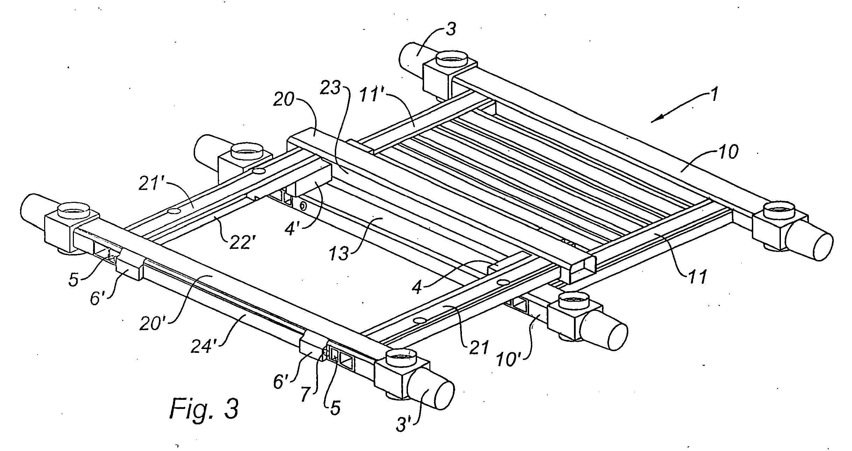

Les barrettes 4, 4' permettent ainsi de guider le caisson 2 lors de son déplacement entre la position déployée représentée sur les figures 2 et 3 et la position repliée représentée sur les figures 4 et 5.

Selon la figure 7, en fin de déplacement dans un sens ou dans l'autre les extrémités 44 de l'une des branches latérales 42, 42' des barrettes 4, 4' pénètrent dans les orifices traversants 5 percés dans l'une des poutres transversales 20, 20' du caisson 2 dont l'emplacement et la géométrie sont adaptés.

Le déplacement se poursuit jusqu'à ce que la face interne 23, 23' de l'une des poutres transversales 20, 20' du caisson 2 vienne en butée contre l'épaulement associé 41, 41' du corps 40.

Dans cette position finale qui correspond à la position repliée ou à la position déployée les encoches 43, 43' de l'une des branches latérales 42, 42' des barrettes 4, 4' font saillie au-delà de la face externe 24, 24' de l'une des poutres transversales 20, 20' du caisson 2.

Selon les figures 2 à 5 et 7, les faces externes 24, 24' des poutres transversales 20, 20' du caisson 2 sont équipées chacune de deux coulisseaux 6, 6' mobiles en translation le long de celle-ci.

Comme représenté plus précisément sur la figure 7, ces coulisseaux sont équipés d'ergots de verrouillage 7 susceptibles de pénétrer dans les encoches de blocage 43, 43' des barrettes 4, 4'.

Le déplacement manuel de ces ergots de verrouillage 7 permet ainsi de maintenir le caisson 2 en position repliée ou en position déployée.

## Revendications

1. Châssis pour panier-siège de pécheur comportant:
- un cadre rigide (1) essentiellement rectangulaire équipé d'au moins trois, de préférence de quatre pattes d'appui et définissant un repose pied,
- un caisson (2) essentiellement rectangulaire portant le panier-siège, et équipé de deux pattes d'appui à sa partie arrière mais dépourvu de pattes d'appui à sa partie avant, et **caractérisé en ce que** le caisson (2) est monté coulissant sur le cadre (1), et **en ce qu'**il comporte des moyens de blocage permettant de maintenir sélectivement le caisson (2) portant le panier-siège dans une position repliée au-dessus du cadre (1) ou dans une position déployée à l'arrière de ce cadre (1) selon le souhait du pécheur.

2. Châssis pour panier-siège de pêcheur selon la revendication 1,
**caractérisé en ce que**
les moyens de blocage sont constitués par deux barrettes formant butée (4, 4') montées solidairement sur le cadre (1) en regard l'une de l'autre et équipées à leurs extrémités respectives de deux encoches de blocage (43, 43') coopérant avec des organes de verrouillage (6, 6') solidaires du caisson (2) de manière à définir la position repliée et la position déployée.

3. Châssis pour panier-siège de pêcheur selon la revendication 2,
**caractérisé en ce que**
le cadre (1) et le caisson (2) sont constitués par l'assemblage de profilés de préférence tubulaires et à section rectangulaire comportant deux poutres transversales (10, 10' ; 20, 20') reliées par deux traverses latérales (11, 11'; 21, 21') à leurs extrémités respectives, les traverses latérales (21, 21') du caisson (2) étant respectivement équipées sur leurs faces internes de rainures de réception (22, 22') des barrettes (4, 4'), ces barrettes (4, 4') permettant ainsi de guider le caisson (2) lors de son déplacement entre la position repliée et la position déployée.

4. Châssis pour panier-siège de pécheur selon la revendication 3,
**caractérisé en ce que**
les barrettes (4, 4') sont fixées sur la face supérieure (13) de la poutre transversale arrière (10') du cadre (1).

5. Châssis pour panier-siège de pêcheur selon l'une quelconque des revendications 3 et 4,
**caractérisé en ce que**
les barrettes (4, 4') comportent un corps médian (40) faisant saillie à la partie interne du caisson (2) et délimité de part et d'autre par des épaulements (41, 41') formant butée, ainsi que deux branches latérales (42, 42') situées dans le prolongement du corps médian (40) au-delà des épaulements (41, 41') et logées dans les rainures de réception (22, 22') des traverses latérales (21, 21') du caisson (2), ces branches latérales pénétrant dans des orifices (5) correspondants percés dans les poutres transversales (20, 20') du caisson (2) lors du déplacement de ce caisson entre la position repliée et la position déployée et étant équipées des encoches de blocage (43, 43') à leurs extrémités respectives.

6. Châssis pour panier-siège de pêcheur selon l'une quelconque des revendications 3 à 5,
**caractérisé en ce que**
les organes de verrouillage sont constitués par des coulisseaux (6) mobiles en translation le long de la face externe (24, 24') des poutres transversales (20, 20') du caisson (2) et équipés d'ergots de verrouillage (7) susceptibles de pénétrer dans les encoches de blocage (43, 43') des barrettes (4, 4') pour maintenir le caisson (2) en position repliée ou en position déployée.

## Claims

1. Chassis for a fishing seat-box comprising:
- a substantially rectangular rigid frame (1) which is provided with at least three, preferably four support legs and which defines a footrest,
- a substantially rectangular casing (2) which carries the seat-box and which is provided with two support legs at the rear portion thereof but which has no support legs at the front portion thereof, and **characterised in that** the casing (2) is mounted so as to slide on the frame (1) and **in that** it comprises blocking means which allow the casing (2) which carries the seat-box to be selectively retained in a folded position above the frame (1) or in a deployed position at the rear of this frame (1) in accordance with the wishes of the fisherman.

2. Chassis for a fishing seat-box according to claim 1,
**characterised in that**
the blocking means are constituted by two bars which form a stop (4, 4') and which are mounted so as to be fixedly joined to the frame (1) facing each other and which are provided at their respective ends with two blocking notches (43, 43') which co-operate with locking members (6, 6') which are fixedly joined to the casing (2) so as to define the folded position and the deployed position.

3. Chassis for a fishing seat-box according to claim 2,
**characterised in that**
the frame (1) and the casing (2) are constituted by the assembly of profile-members which are preferably tubular and have a rectangular cross-section comprising two transverse beams (10, 10'; 20, 20') which are connected by means of two lateral cross-members (11, 11'; 21, 21') at the respective ends thereof, the lateral cross-members (21, 21') of the casing (2) being provided on the inner faces thereof with grooves (22, 22') for receiving the bars (4, 4'), respectively, these bars (4, 4') thus allowing the casing (2) to be guided during its movement between the folded position and the deployed position.

4. Chassis for a fishing seat-box according to claim 3,
**characterised in that**
the bars (4, 4') are fixed to the upper face (13) of the rear transverse beam (10') of the frame (1).

5. Chassis for a fishing seat-box according to either claim 3 or claim 4,
**characterised in that**
the bars (4, 4') comprise a central body (40) which protrudes at the inner portion of the casing (2) and which is delimited at one side and the other by shoulders (41, 41') which form a stop, and two lateral branches (42, 42') which are located in the extension of the central body (40) beyond the shoulders (41, 41') and which are accommodated in the receiving grooves (22, 22') of the lateral cross-members (21, 21') of the casing (2), these lateral branches being introduced into corresponding holes (5) which are formed in the transverse beams (20, 20') of the casing (2) during the movement of this casing between the folded position and the deployed position and being provided with the blocking notches (43, 43') at the respective ends thereof.

6. Chassis for a fishing seat-box according to any one of claims 3 to 5,
**characterised in that**
the locking members are constituted by sliding members (6) which can move in translation along the outer face (24, 24') of the transverse beams (20, 20') of the casing (2) and which are provided with locking studs (7) which are capable of being introduced into the blocking notches (43, 43') of the bars (4, 4') in order to retain the casing (2) in a folded position or in a deployed position.

## Patentansprüche

1. Gestell für eine Sitzkiste für Angler mit:
- einem starren, im Wesentlichen rechteckigen Rahmen (1), der mit wenigstens drei, vorzugsweise vier Stützfüßen versehen ist und eine Fußstütze bildet und
- einem im Wesentlichen rechteckigen Tragrahmen (2), der die Sitzkiste trägt und an seinem hinteren Teil mit zwei Stützfüßen, an seinem vorderen Teil aber nicht mit Stützfüßen versehen ist,
**dadurch gekennzeichnet,**
- **dass** der Tragrahmen (2) verschiebbar auf dem Rahmen (1) angeordnet ist und
- **dass** er Verriegelungsmittel aufweist, durch die der die Sitzkiste tragende Tragrahmen (2), je nach Wunsch des Anglers, wahlweise in einem über den Rahmen (1) zurückgeschobenen Zustand oder in einem auseinander gezogenen Zustand hinten an diesem Rahmen (1) gehalten werden kann.

2. Gestell für eine Sitzkiste für Angler nach Anspruch 1,
**dadurch gekennzeichnet, dass** die Verriegelungsmittel von zwei einen Anschlag bildenden Stegen (4, 4') gebildet sind, die, einander gegenüberliegend, fest auf dem Rahmen (1) angebracht und an ihren jeweiligen Enden mit zwei Verriegelungsaussparungen (43, 43') versehen sind, die mit fest mit dem Tragrahmen (2) verbundenen Verriegelungsvorrichtungen (6, 6') zusammenwirken, um den zurückgeschobenen und den auseinander gezogenen Zustand festzulegen.

3. Gestell für eine Sitzkiste für Angler nach Anspruch 2,
**dadurch gekennzeichnet, dass** der Rahmen (1) und der Tragrahmen (2) durch das Verbinden von vorzugsweise rohrförmigen Profilen mit rechteckigem Querschnitt gebildet sind und zwei Querträger (10, 10'; 20, 20') aufweisen, die an ihren beiderseitigen Enden durch zwei seitliche Verbindungsriegel (11, 11'; 21, 21') miteinander verbunden sind, wobei die seitlichen Verbindungsriegel (21, 21') des Tragrahmens (2) jeweils auf ihren Innenseiten mit Aufnahmenuten (22, 22') für die Stege (4, 4') versehen sind und auf diese Weise der Tragrahmen (2) bei seinem Verschieben zwischen dem zurückgeschobenen und dem auseinander gezogenen Zustand durch diese Stege (4, 4') geführt werden kann.

4. Gestell für eine Sitzkiste für Angler nach Anspruch 3, **dadurch gekennzeichnet, dass** die Stege (4, 4') auf der Oberseite (13) des hinteren Querträgers (10) des Rahmens (1) befestigt sind.

5. Gestell für eine Sitzkiste für Angler nach einem der Ansprüche 3 und 4, **dadurch gekennzeichnet, dass** die Stege (4, 4') sowohl einen in der Mitte gelegenen Körper (40) aufweisen, der in den Innenbereich des Tragrahmens (2) vorsteht und beidseits von einem einen Anschlag bildenden Absatz (41, 41') begrenzt ist, als auch zwei seitliche, sich in Verlängerung des mittleren Körpers (40) über die Absätze (41, 41') hinaus erstreckende und in die Aufnahmenuten (22, 22') der seitlichen Verbindungsriegel (21, 21') des Tragrahmens (2) aufgenommene Arme (42, 42') aufweisen und diese seitlichen Arme beim Verschieben dieses Tragrahmens zwischen dem zurückgeschobenen und dem auseinander gezogenen Zustand in entsprechende Öffnungen (5) eindringen, die in den Querträgern (20, 20') des Tragrahmens (2) ausgebildet sind, und an ihren jeweiligen Enden mit Verriegelungsausnehmungen (43, 43') versehen sind.

6. Gestell für eine Sitzkiste für Angler nach einem der Ansprüche 3 bis 5, **dadurch gekennzeichnet, dass** die Verriegelungsvorrichtungen von entlang der Außenseite (24, 24') der Querträger (20, 20') des Tragrahmens (2) parallel verschiebbaren Schlitten (6) gebildet und mit Verriegelungsstiften (7) versehen sind, die in die Verriegelungsausnehmungen (43, 43') der Stege (4, 4') eindringen können, um den Tragrahmen (2) im zurückgeschobenen oder auseinander gezogenen Zustand festzuhalten.
